# FASCICULE DE BREVET EUROPEEN

(11) **EP 0 757 460 B1**
(45) Date de publication et mention de la délivrance du brevet: **03.12.2003**
(21) Numéro de dépôt: 96401324.7
(22) Date de dépôt: 18.06.1996
(51) Int. Cl.: H04L 25/08

(54) **Dispositif de transmission d'informations en différentiel entre au moins deux organes d'un véhicule automobile**
Einrichtung zum differenziellen Übertragen von Informationen zwischen wenigstens zwei Vorrichtungen eines Fahrzeuges
Apparatus for the differential transmission of information between at least two devices in a vehicle

(30) Priorité: 01.08.1995 FR 9509375
(43) Date de publication de la demande: 05.02.1997
(73) Titulaire: AUTOMOBILES PEUGEOT, 75116 Paris (FR); AUTOMOBILES CITROEN, 92200 Neuilly-sur-Seine (FR)
(72) Inventeur: Fromion, Alexandre, 92160, Antony (FR)
(74) Mandataire: Habasque, Etienne Joel Jean-François

(56) Documents cités:
- FR-A- 2 653 281
- FR-A- 2 691 597
- GB-A- 2 283 381

## Description

La présente invention concerne un dispositif de transmission d'informations en différentiel entre au moins deux organes d'un véhicule automobile, reliés par deux lignes de transmission d'informations.

Dans les dispositifs de ce type, chaque organe comporte des moyens d'émission d'informations et des moyens de réception d'informations, reliés à un gestionnaire de protocole par exemple à micro-contrôleur.

Ces dispositifs de transmission d'informations en différentiel ont été développés lors de la définition des systèmes de transmission d'informations pour véhicules automobiles, à cause d'un certain nombre de problèmes liés à ces applications et notamment des parasites pouvant perturber ces transmissions.

L'utilisation de la transmission différentielle permet d'obtenir une bonne immunité à ces parasites, mais elle présente un certain nombre d'inconvénients au niveau de sa fiabilité.

En effet, celle-ci est liée à la fiabilité de la connectique (micro-coupure, oxydation des contacts, etc...), aux possibilités de mise au potentiel de la carrosserie ou au plus de la batterie d'un des fils de transmission d'informations, ce qui a pour effet d'empêcher le fonctionnement correct de ce type de dispositifs de transmission, etc...

Une réponse à ce problème est déjà connue du document EP-A-0 318 354 aux noms de AUTOMOBILES PEUGEOT, AUTOMOBILES CITROEN et REGIE NATIONALE DES USINES RENAULT.

Dans ce document, on utilise un couplage capacitif de la transmission en mode polling entre les différents organes du véhicule.

Il est ainsi possible de faire fonctionner le dispositif décrit dans ce document selon un mode normal en différentiel ou selon un mode dégradé à partir des informations transitant sur l'une des lignes de transmission d'informations.

Cependant, l'utilisation de ce dispositif est limitée à certaines applications et il n'est pas applicable par exemple aux réseaux de transmission d'informations multi-maîtres.

En effet, dans un réseau de ce type, tous les organes reliés au réseau peuvent accéder aux lignes de transmission pour imposer leur message sur celles-ci et il est donc important d'assurer une bonne diffusion du message et une bonne cohérence de celui-ci pour tous les organes.

On connaît également du document FR-A-2 680 294 aux noms de AUTOMOBILES PEUGEOT, AUTOMOBILES CITROEN et REGIE NATIONALE DES USINES RENAULT, un dispositif de transmission d'informations en différentiel entre au moins deux organes d'un véhicule automobile, reliés par deux lignes de transmission d'informations, dont chacun comporte des moyens d'émission d'informations et des moyens de réception d'informations, reliés à un gestionnaire de protocole à micro-contrôleur par exemple.

Dans ce document, les moyens de réception de chaque organe comportent trois comparateurs, un premier recevant en entrée les signaux transitant sur les deux lignes de transmission d'informations, un second recevant en entrée les signaux transitant sur une ligne de transmission d'informations et un troisième recevant en entrée les signaux transitant sur l'autre ligne de transmission d'informations et, interposés entre la sortie de ces comparateurs et l'entrée d'informations du gestionnaire de protocole, des moyens de connexion sélective des sorties de ces comparateurs, à l'entrée d'informations du gestionnaire de protocole.

Ces moyens de connexion sélective comprennent par exemple un multiplexeur recevant en entrée les sorties des comparateurs et délivrant à l'entrée d'informations du gestionnaire de protocole, l'une de ces sorties sous la commande de ce gestionnaire de protocole, en fonction de l'état des signaux présents à son entrée d'informations, pour permettre un fonctionnement du dispositif en mode différentiel normal et en mode dégradé à partir des informations transitant sur l'une des lignes de transmission.

Cependant, cette structure présente également un certain nombre d'inconvénients, car elle nécessite l'utilisation d'un certain nombre de bornes du gestionnaire de protocole.

De plus, il est nécessaire d'intégrer dans celui-ci des programmes de diagnostic de ligne.

Le but de l'invention est donc de résoudre ces problèmes.

A cet effet, l'invention a pour objet un dispositif de transmission d'informations en différentiel entre au moins deux organes d'un véhicule automobile, reliés par deux lignes de transmission d'informations, dont chacun comporte des moyens d'émission d'informations et des moyens de réception d'informations reliés à un gestionnaire de protocole, les moyens de réception de chaque organe comportant trois comparateurs, un premier recevant en entrée les signaux transitant sur les deux lignes de transmission d'informations, un second recevant en entrée les signaux transitant sur une ligne de transmission d'informations et un troisième recevant en entrée les signaux transitant sur l'autre ligne de transmission d'informations, et, interposés entre la sortie de ces comparateurs et l'entrée d'informations du gestionnaire de protocole, des moyens de connexion des sorties de ces comparateurs à l'entrée d'informations du gestionnaire de protocole, pour permettre un fonctionnement du dispositif en mode différentiel normal et en mode dégradé à partir des informations transitant sur l'une des lignes de transmission, caractérisé en ce que les moyens de connexion comprennent des moyens capacitifs de découplage des sorties des comparateurs.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure d'un dispositif de transmission d'informations de l'état de la technique, telle que décrite par exemple en partie dans le document FR-A-2 680 294; et
- la Fig.2 représente un schéma électrique illustrant la structure d'une partie d'un dispositif de transmission d'informations selon l'invention.

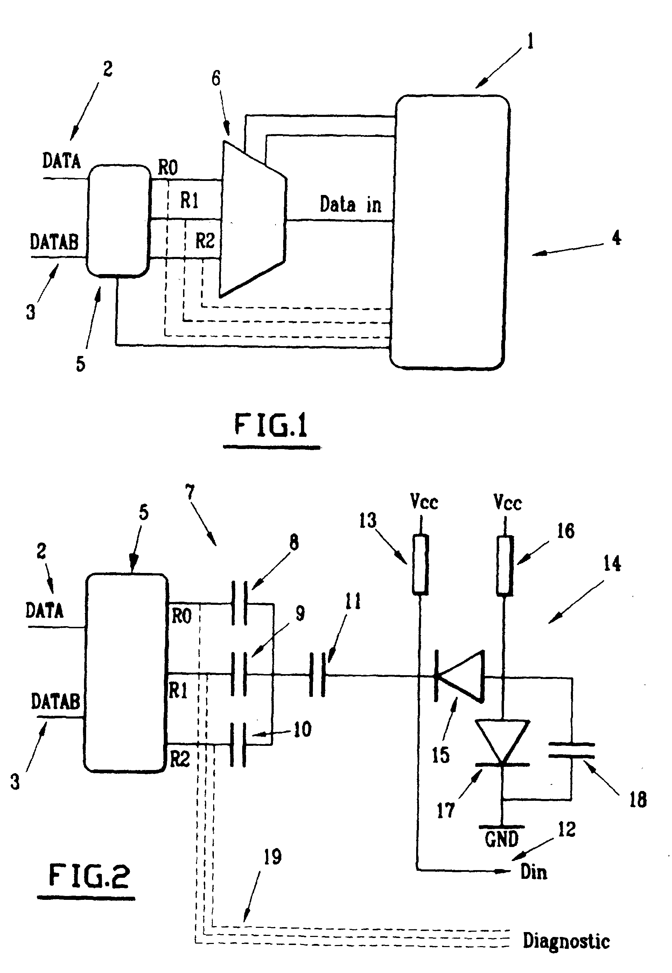

Ainsi qu'on peut le voir sur la figure 1, un dispositif de transmission d'informations en différentiel permet de transmettre des informations entre au moins deux organes d'un véhicule automobile, reliés par deux lignes de transmission d'informations.

Pour des raisons de clarté, seul un organe est représenté sur cette figure 1 et est désigné par la référence générale 1.

Le ou les autres organes du dispositif présentent une structure analogue à celle illustrée sur cette figure 1.

Les lignes de transmission d'informations en différentiel sont désignées par les références 2 et 3 et permettent par exemple de transmettre des informations complémentaires DATA et DATAB.

Comme cela est décrit dans le document mentionné précédemment, chaque organe comporte des moyens d'émission d'informations et des moyens de réception d'informations reliés à un gestionnaire de protocole désigné par la référence générale 4 sur cette figure 1, comportant par exemple tout micro-contrôleur approprié.

De plus et comme cela est décrit dans le document antérieur mentionné précédemment, des moyens formant interface physique de ligne désignés par la référence générale 5 et des moyens de multiplexage désignés par la référence générale 6, sont raccordés entre les lignes de transmission d'informations et la borne d'entrée d'informations du gestionnaire à micro-contrôleur.

Les moyens d'interface physique 5 comprennent trois comparateurs comme cela est décrit dans le document mentionné précédemment, c'est à dire un premier comparateur recevant en entrée des signaux transitant sur les deux lignes de transmission d'informations, un second comparateur recevant en entrée les signaux transitant sur l'une des lignes de transmission d'informations et un troisième comparateur recevant en entrée les signaux transitant sur l'autre ligne de transmission d'informations.

Les sorties de ces comparateurs sont désignées par les référence R0, R1 et R2 sur cette figure 1 et sont raccordées à des entrées correspondantes des moyens de multiplexage 6, qui reçoivent également sur deux bornes de commande des signaux de pilotage en provenance du micro-contrôleur du gestionnaire de protocole.

Ces moyens constituent comme décrit précédemment, des moyens de connexion sélective de l'une ou de l'autre de ces sorties R0, R1 ou R2 à l'entrée d'informations du gestionnaire de protocole et sont commandés par celui-ci en fonction de l'état des signaux présents à son entrée d'informations, pour permettre un fonctionnement du dispositif en mode différentiel normal et en mode dégradé à partir des informations transitant sur l'une des lignes de transmission d'informations.

Pour de plus amples renseignements concernant le fonctionnement de ce dispositif, on se reportera aux documents mentionnés précédemment.

Pour résoudre les problèmes évoqués précédemment à propos de l'intégration de programmes de diagnostic dans le micro-contrôleur et de l'utilisation de bornes de celui-ci, dans le dispositif de transmission selon l'invention, représenté sur la figure 2, on utilise des moyens de connexion des sorties de ces comparateurs à l'entrée d'informations du gestionnaire de protocole qui se présentent sous la forme de moyens capacitifs de découplage des sorties de ces comparateurs, ces moyens capacitifs étant désignés par exemple par la référence générale 7 sur cette figure 2.

En fait, ces moyens de découplage comportent par exemple trois condensateurs désignés par les références générales 8,9 et 10 respectivement dont une borne est raccordée à une borne correspondante R0, R1 ou R2 de sortie des moyens d'interface 5 et dont les autres bornes sont raccordées ensemble à une borne d'un quatrième condensateur désigné par la référence générale 11 sur cette figure.

L'autre borne de ce quatrième condensateur 11 est reliée à la borne d'entrée d'informations du gestionnaire de protocole, qui est désignée par la référence générale 12 sur cette figure. Cette borne est également reliée à une borne positive d'alimentation Vcc à travers une résistance 13 de fixation de potentiel et à des moyens de génération d'une composante continue de signal, désignés par la référence générale 14 sur cette figure.

Ces moyens de génération comportent une diode 15 dont la cathode est reliée à la borne 12 et dont l'anode est reliée au point milieu d'un pont entre une résistance 16 raccordée à la borne positive d'alimentation Vcc et à l'anode d'une seconde diode 17 connectée en parallèle avec un cinquième condensateur 18, à la masse.

L'association des condensateurs 8,9,10 et 11 respectivement permet d'utiliser des condensateurs de forte capacité et polarisés (chimiques) dont le prix de revient est faible.

Cette utilisation de moyens capacitifs de découplage permet donc d'isoler une sortie quelconque des comparateurs si celle-ci a un potentiel fixe.

La diode 17 associée à la résistance 16 et au condensateur 18 permettent de fixer un potentiel de référence, par exemple de 0,65 V au niveau à l'anode de la diode 15 qui joue le rôle, comme indiqué précédemment, de générateur de composante continue de signal.

En effet, cette diode ne conduit que si sa cathode est négative, car son anode est polarisée à une tension égale à sa tension de seuil.

Le signal alternatif présent sur la borne correspondante du condensateur 11 est aligné sur le potentiel de masse GND.

Ce signal est donc utilisable par le micro-contrôleur du gestionnaire comme entrée logique de données sérielles. Il est à noter que cette entrée doit être une entrée de type Trigger de Schmitt, car ce dispositif ne conserve pas le temps de montée des signaux.

La résistance 13 permet de fixer le potentiel de la borne d'entrée d'informations 12 du micro-contrôleur en l'absence de communication (état récessif sur la ligne).

Il est également possible de connaître l'état des sorties R0, R1 et R2 en les connectant à trois entrées du micro-contrôleur si l'on souhaite mettre en oeuvre une stratégie de repli en cas de fonctionnement sur un fil, comme cela est illustré en traits pointillés désignés de façon générale par la référence 19 sur cette figure 2.

On conçoit alors que ces moyens capacitifs de découplage des sorties des comparateurs se présentent sous la forme d'une cellule analogique qui réalise la fonction de commutation automatique de la bonne entrée d'informations sur la borne correspondante du micro-contrôleur à partir des sorties des comparateurs, en limitant autant que possible le matériel nécessaire au diagnostic ainsi que le nombre de bornes utilisées sur le micro-contrôleur.

En cas de fil pincé à la masse ou à la tension d'alimentation, ou encore coupé, les sorties R0, R1 ou R2 restent figées dans un état stable et plus aucune variation ne traverse donc le condensateur de découplage correspondant, de sorte que l'entrée en défaut est isolée et découplée de l'une ou des autres entrées.

De plus, le reste du montage permet de régénérer une composante continue compatible avec le niveau d'entrée logique du micro-contrôleur.

Cette cellule permet donc de bénéficier de la redondance des fils de la paire différentielle et peut être utilisée dans n'importe quelle application multiplexée ayant une structure à trois comparateurs.

Cette cellule est par ailleurs très simple et très économique et ne nécessite aucune charge au niveau logiciel de diagnostic du micro-contrôleur tout en présentant un temps de réponse très faible.

## Revendications

1. Dispositif de transmission d'informations en différentiel entre au moins deux organes d'un véhicule automobile, reliés par deux lignes de transmission d'informations (2,3), dont chacun comporte des moyens d'émission d'informations et des moyens de réception d'informations reliés à un gestionnaire de protocole (4), les moyens de réception de chaque organe comportant trois comparateurs (5), un premier recevant en entrée les signaux transitant sur les deux lignes de transmission d'informations (2,3), un second recevant en entrée les signaux transitant sur une ligne de transmission d'informations et un troisième recevant en entrée les signaux transitant sur l'autre ligne de transmission d'informations, et, interposés entre les sorties (R0,R1,R2) de ces comparateurs et l'entrée d'informations (12) du gestionnaire de protocole (4), des moyens (7) de connexion des sorties de ces comparateurs à l'entrée d'informations (12) du gestionnaire de protocole, pour permettre un fonctionnement du dispositif en mode différentiel normal et en mode dégradé à partir des informations transitant sur l'une des lignes de transmission (2,3), **caractérisé en ce que** les moyens (7) de connexion comprennent des moyens capacitifs (8-11) de découplage des sorties des comparateurs.

2. Dispositif selon la revendication 1, **caractérisé en ce que** les sorties (R0,R1,R2) des comparateurs sont reliées les unes aux autres à travers des condensateurs (8,9,10) et à l'entrée d'informations (12) du gestionnaire de protocole (4) à travers un autre condensateur (11).

3. Dispositif selon la revendication 1 ou 2, **caractérisé en ce que** lesdits moyens capacitifs (7) et l'entrée d'informations (12) du gestionnaire de protocole sont reliés à des moyens (14) de génération d'une composante continue de signal.

4. Dispositif selon la revendication 3, **caractérisé en ce que** les moyens de génération de la composante continue de signal comprennent une première diode (15) dont la cathode est reliée aux moyens capacitifs (7) et à l'entrée d'informations (12) et dont l'anode est reliée au point milieu d'un pont raccordé entre les bornes positive et négative d'une alimentation et comprenant d'une part, une résistance (16) et d'autre part, une autre diode (17) et un condensateur (18) en parallèle.

5. Dispositif selon l'une quelconque des revendications précédentes, **caractérisé en ce que** les moyens capacitifs (7) et l'entrée d'informations (12) du gestionnaire de protocole sont reliés à une résistance (13) de fixation du potentiel de cette entrée en l'absence de communication sur les lignes de transmission.

## Patentansprüche

1. Vorrichtung zur differenziellen Übertragung von Daten zwischen mindestens zwei Einrichtungen eines Kraftfahrzeugs, die mit zwei Datenübertragungsleitungen (2, 3) verbunden werden, wobei jede Einrichtung Mittel zum Senden von Daten und Mittel zum Empfangen von Daten umfasst, die an einen Protokollverwalter (4) angeschlossen sind, wobei die Empfangsmittel jeder Einrichtung mindestens drei Komparatoren (5) umfassen, wobei ein erster Komparator am Eingang Signale empfängt, die auf den zwei Datenübertragungsleitungen (2, 3) übertragen werden und ein zweiter Komparator am Eingang die Signale empfängt, die auf der einen Datenübertragungsleitung übertragen werden und ein dritter Komparator am Eingang die Signale empfängt, die auf der anderen Datenübertragungsleitung übertragen werden, und zwischen den Ausgängen (R0, R1, R2) dieser Komparatoren und dem Dateneingang (12) des Protokollverwalters (4), Mittel (7) zum Anschließen der Ausgänge dieser Komparatoren an den Dateneingang (12) des Protokollverwalters geschaltet sind, um ein Funktionieren der Vorrichtung im normalen differenziellen Betrieb und im reduzierten Betrieb mit Daten, die auf einer der Datenübertragungsleitungen (2, 3) übertragen werden, zu erlauben, **dadurch gekennzeichnet, dass** die Mittel (7) zum Anschließen kapazitive Mittel (8 - 11) zum Entkoppeln der Komparatorausgänge umfassen.

2. Vorrichtung nach Anspruch 1, **dadurch gekennzeichnet, dass** die Ausgänge (R0, R1, R2) der Komparatoren untereinander über Kondensatoren (8, 9, 10) und an den Dateneingang (12) des Protokollverwalters (4) über einen weiteren Kondensator (11) angeschlossen sind.

3. Vorrichtung nach den Ansprüchen 1 oder 2, **dadurch gekennzeichnet, dass** die kapazitiven Mittel (7) und der Dateneingang (12) des Protokollverwalters an Mittel (14) zum Erzeugen einer Signalgleichstromkomponente angeschlossen sind.

4. Vorrichtung nach Anspruch 3, **dadurch gekennzeichnet, dass** die Mittel zum Erzeugen der Signalgleichstromkomponente eine erste Diode (15) umfassen, deren Kathode an kapazitive Mittel (7) und an den Dateneingang (12) angeschlossen sind und deren Anode an den mittleren Punkt einer Brücke angeschlossen ist, die zwischen der positiven und der negativen Klemme einer Stromversorgung angeschlossen ist, und einerseits einen Widerstand (16) und andererseits eine weitere Diode (17) und einen parallel geschalteten Kondensator (18) umfasst.

5. Vorrichtung nach einem der vorhergehenden Ansprüche, **dadurch gekennzeichnet, dass** die kapazitiven Mittel (7) und der Dateneingang (12) des Protokollverwalters an einen Widerstand (13) zum Festlegen des Potentials dieses Eingangs bei Fehlen der Kommunikation auf den Datenübertragungsleitungen angeschlossen sind.

## Claims

1. Device for the differential transmission of data between at least two units of an automotive vehicle, linked by two data transmission lines (2,3), each of which includes means of sending data and means of receiving data, said means being linked to a protocol manager (4), the reception means of each unit comprising three comparators (5), a first receiving as input the signals transiting on the two data transmission lines (2,3), a second receiving as input the signals transiting on one data transmission line and a third receiving as input the signals transiting on the other data transmission line, and, placed between the outputs (R0, R1, R2) of these comparators and the data input (12) of the protocol manager (4), means (7) for connecting the outputs of these comparators to the data input(12) of the protocol manager, in order to allow the device to function in normal differential mode and in downgraded mode from the data transiting on one of the transmission lines (2,3), **characterised in that** the connection means (7) comprise capacitive means (8-11) of de-coupling the outputs of the comparators.

2. Device according to claim 1, **characterised in that** the outputs (R0, R1, R2) of the comparators are linked to one another through capacitors (8, 9, 10) and to the data input (12) of the protocol manager (4) through another capacitor (11).

3. Device according to claim 1 or 2, **characterised in that** said capacitive means (7) and the data input (12) of the protocol manager are linked to means (14) f or generating a signal DC component.

4. Device according to claim 3, **characterised in that** the means for generating the signal DC component comprise a first diode (15), the cathode of which is linked to the capacitive means (7) and to the data input (12) and the anode of which is linked to the mid-point of a bridge connected between the positive and negative terminals of a power supply and comprising firstly a resistor (16) and secondly another diode (17) and a capacitor (18) in parallel.

5. Device according to any one of the preceding claims, **characterised in that** the capacitive means (7) and the data input (12) of the protocol manager are linked to a resistor (13) for fixing the potential of this input in the absence of communication on the transmission lines.
